# EUROPEAN PATENT SPECIFICATION

(11) **EP 3 853 304 B1**
(45) Date of publication and mention of the grant of the patent: **17.04.2024**
(21) Application number: 19734537.4
(22) Date of filing: 30.05.2019
(51) Int. Cl.: C08L 67/04, B29C 48/32, C08G 63/06, C08G 63/08, C08G 63/91

(54) **BIODEGRADABLE PROFILE EXTRUDED ARTICLES**
BIOLOGISCH ABBAUBARE STRANGGEPRESSTE GEGENSTÄNDE
ARTICLES EXTRUDÉS PROFILÉS BIODÉGRADABLES

(30) Priority: 20.09.2018 US 201862733869 P
(43) Date of publication of application: 28.07.2021
(73) Proprietor: Danimer IPCo, LLC, Bainbridge, GA 39817 (US)
(72) Inventor: JOHNSON, Adam, Bainbridge, GA 39819 (US); MCCLANAHAN, Eric, Bainbridge, GA 39817 (US); GRUBBS, III, Joe, B., Bishop, GA 30621 (US)
(74) Representative: Boult Wade Tennant LLP
(86) International application number: PCT/US2019/034542
(87) International publication number: WO 2020/060597

(56) References cited:
- WO-A1-2017/087658
- WO-A2-2010/151798
- JP-A- 2001 146 523
- JP-A- 2005 350 530
- JP-A- 2006 136 657
- US-A1- 2003 217 648

## Description

### CROSS-REFERENCE TO RELATED APPLICATIONS

This application claims the benefit of the earlier filing date of US provisional patent application 62/733,869, filed September 20, 2018.

### FIELD

This disclosure relates to biodegradable polymeric compositions. More particularly, this disclosure relates to biodegradable food service items and other articles which are formed by extrusion molding.

### BACKGROUND

For the sake of convenience, consumers frequently use food and beverage service items - such as eating utensils, drinking straws, beverage splash sticks, beverage stirrers, cocktail picks, and toothpicks - which are disposable. Disposable food service items are particularly convenient for serving food and beverage at restaurants and at outdoor dining events. Often such items are extruded or otherwise molded from polymeric materials.

Conventional, petroleum-derived polymers such as polyethylene (PE), polypropylene (PP), or polyethylene terephthalate (PET) exhibit chemical and mechanical properties which make them well-suited for extruding or molding into food service items.

Disposable food service items extruded or molded from such conventional, petroleum-derived polymers, however, present an environmental challenge because such materials do not decompose or biodegrade when disposed of in landfills. Rather such materials may linger for centuries when buried underground.
WO 2010/151798 A2 relates to compositions of branched polymer compositions comprising polyhydroxyalkanoates (PHAs) and either poly(butylene succinate) (PBS) or polybutylene succinate adipate (PBSA) or combinations thereof.

Thus, it would be desirable to provide food and drink service items which are formed from polymeric materials which are biodegradable and which possess suitable chemical and mechanical properties so as to be formed by extrusion or other molding technologies.

### SUMMARY OF THE INVENTION

The above and other needs are met by a biodegradable tubular article. According to one embodiment, this biodegradable tubular article is profile extrusion molded from a polymer resin which is made up of at least 25 weight percent of at least one biodegradable polymer.

In some embodiments, the biodegradable tubular article is preferably selected from the group consisting of medical tubing, gas tubing, laboratory tubing, automotive tubing, drinking straws, and beverage stirrers.

The polymer resin is made up of at least one biodegradable polymer selected from the group consisting of polyhydroxyalkanoates, polycaprolactone, polylactic acid, polybutylene succinate, polybutylene succinate-co-butylene adipate, polybutylene adipate terephthalate, blends of two or more of the aforementioned polymers, and reaction products of two or more of the aforementioned polymers.

The at least one biodegradable polymer includes polyhydroxyalkanoates, and the polyhydroxyalkanoates are made up of from about 65 (preferably about 70) to about 99.5 mole percent hydroxybutyrate moieties and from about 0.5 to about 35 (preferably about 30) mole percent hydroxyhexanoate moieties. In some instances, the polyhydroxyalkanoates may be a terpolymer. For example, the polyhydroxyalkanoates may be made up of monomer residues of 3-hydoxybutyrate, monomer residues of 3-hydoxyvalerate, and monomer residues of 3-hydoxyhexanoate.

According to certain embodiments, the at least one biodegradable polymer preferably includes polyhydroxyalkanoates having a weight average molecular weight from about 1000 Daltons to about 2.5 million Daltons. According to other embodiments, the at least one biodegradable polymer preferably includes polyhydroxyalkanoates having a weight average molecular weight from about 10,000 Daltons to about 7.5 million Daltons.

The at least one biodegradable polymer includes a reaction product formed from reactive extrusion of polyhydroxyalkanoates and a second biodegradable polymer in accordance with the claims.

According to certain embodiments, the at least one biodegradable polymer preferably includes polycaprolactone and/or polylactic acid having a weight average molecular weight from 10,000 Daltons to about 300,000 Daltons.

In certain embodiments, the polymer resin preferably at least one biodegradable polymer selected from the group consisting polylactic acid, polybutylene succinate, polybutylene succinate-co-butylene adipate, polybutylene adipate terephthalate, and mixtures thereof.

In some embodiments, it is preferred that the polymer resin also includes from about 1 to about 50 weight percent of at least one filler selected from the group consisting of clays, calcium carbonate, talc, kaolinite, montmorillonite, bentonite, silica, chitin, titanium dioxide, nano clay, nanocellulose, mica and mixtures thereof.

In some instances, it is preferred that the polymer resin also includes from about 0.5 to about 20 weight percent of at least one nucleating agent selected from the group consisting of polyester waxes, behenamide, crodamide, stearamide, erucamide, pentaerythritol, dipentaerythritol, sulfur and mixtures thereof.

According to certain embodiments, it is preferred that the polymer resin also includes from about 1.0 to about 25 weight percent of at least one polysaccharide.

In certain embodiments, it is preferred that the polymer resin also includes from about 0.5 to about 15 weight percent of at least one plasticizer selected from the group consisting of sebacates, citrates, fatty esters of adipic acid, fatty esters of succinic acid, fatty esters of glucaric acid, lactates, alkyl diesters, alkyl methyl esters, dibenzoates, propylene carbonate, caprolactone diols having a weight average molecular weight from about 200 to about 10,000 g/mol, polyethylene glycols having a weight average molecular weight from about 400 to about 10,000 g/mol, esters of vegetable oils, long chain alkyl acids, adipates, glycerol, isosorbide derivatives, and mixtures thereof.

In certain embodiments, it is preferred that the polymer resin also includes from about 15 to about 35 weight percent of at least one filler, from about 1.0 to about 5 weight percent of at least one nucleating agent, and from about 0.01 (preferably 0.05) to about 2 of at least one polymerization catalyst or initiator.

In a second aspect, the present disclosure provides a method for making a biodegradable tubular article. According to one embodiment, the method includes an initial step of providing a polymer resin which is made of at least 25 weight percent of at least one biodegradable polymer. A charge of this polymer resin is heated, in an extruder, to a temperature at or above the melting point of the polymer resin. The heated the polymer resin charge is then profile extruded through a die to form a tubular article.

In some embodiments, the biodegradable tubular article is preferably selected from the group consisting of medical tubing, gas tubing, laboratory tubing, automotive tubing, drinking straws, and beverage stirrers.

In some embodiments, the polymer resin is preferably made up of at least one biodegradable polymer selected from the group consisting of polyhydroxyalkanoates, polycaprolactone, polylactic acid, polybutylene succinate, polybutylene succinate-co-butylene adipate, polybutylene adipate terephthalate, blends of two or more of the aforementioned polymers, and reaction products of two or more of the aforementioned polymers.

The at least one biodegradable polymer includes polyhydroxyalkanoates, and the polyhydroxyalkanoates are made up of from about 65 (preferably about 70) to about 99.5 mole percent hydroxybutyrate moieties and from about 0.5 to about 35 (preferably about 30) mole percent hydroxyhexanoate moieties. In some instances, the polyhydroxyalkanoates may be a terpolymer. For example, the polyhydroxyalkanoates may be made up of monomer residues of 3-hydoxybutyrate, monomer residues of 3-hydoxyvalerate, and monomer residues of 3-hydoxyhexanoate.

In certain embodiments, the at least one biodegradable polymer preferably includes polyhydroxyalkanoates having a weight average molecular weight from about 1000 Daltons to about 2.5 million Daltons. According to other embodiments, the at least one biodegradable polymer preferably includes polyhydroxyalkanoates having a weight average molecular weight from about 10,000 Daltons to about 7.5 million Daltons.

The at least one biodegradable polymer includes a reaction product formed from reactive extrusion of polyhydroxyalkanoates and a second biodegradable polymer.

In some embodiments, wherein the at least one biodegradable polymer preferably includes polycaprolactone and/or polylactic acid having a weight average molecular weight from about 10,000 Daltons to about 300,000 Daltons.

In some instances, the polymer resin preferably includes at least one biodegradable polymer selected from the group consisting polylactic acid, polybutylene succinate, polybutylene succinate-co-butylene adipate, polybutylene adipate terephthalate, and mixtures thereof.

In certain embodiments, it is preferred that the polymer resin also includes from about 1 to about 50 weight percent of at least one filler selected from the group consisting of clays, calcium carbonate, talc, kaolinite, montomorillonite, bentonite, silica, chitin, titanium dioxide, nano clay, nanocellulose, mica and mixtures thereof.

In certain embodiments, it is preferred that the polymer resin also includes from about 0.5 to about 20 weight percent of at least one nucleating agent selected from the group consisting of polyester waxes, behenamide, crodamide, stearamide, erucamide, pentaerythritol, dipentaerythritol, sulfur and mixtures thereof.

In some embodiments, it is preferred that the polymer resin also includes from about 1.0 to about 25 weight percent of at least one polysaccharide.

In some embodiments it is preferred that the polymer resin also includes from about 0.5 to about 15 weight percent of at least one plasticizer selected from the group consisting of sebacates, citrates, fatty esters of adipic acid, fatty esters of succinic acid, fatty esters of glucaric acid, lactates, alkyl diesters, alkyl methyl esters, dibenzoates, propylene carbonate, caprolactone diols having a weight average molecular weight from about 200 to about 10,000 g/mol, polyethylene glycols having a weight average molecular weight from about 400 to about 10,000 g/mol, esters of vegetable oils, long chain alkyl acids, adipates, glycerol, isosorbide derivatives, and mixtures thereof.

In some embodiments, it is preferred that the polymer resin also includes from about 15 to about 35 weight percent of at least one filler, from about 1.0 to about 5.0 weight percent of at least one nucleating agent, and from about 0.01 (preferably 0.05) to about 2 weight percent of at least one polymerization catalyst or initiator.

In still another aspect, the present disclosure method for making a biodegradable food service item. According to one embodiment, the method includes an initial step of providing a polymer resin which is made of at least 25 weight percent of a first and a second biodegradable polymer. A charge of this polymer resin is heated to a temperature at or above the melting point of the polymer resin. The food service item is molded from the polymer resin charge.

In certain embodiments, it is preferred that the biodegradable food service time comprises an eating utensil, beverage splash stick, cocktail pick, or toothpick.

In certain embodiments, it is preferred that the at least one biodegradable polymer in the polymer resin charge is made up of a reaction product formed from reactive extrusion of the first and the second biodegradable polymers.

### DETAILED DESCRIPTION

According to the present disclosure, biodegradable articles, such as tubular articles as well as biodegradable food service items, are provided. These biodegradable tubular articles and food service items are extrusion molded from a polymer resin which is made up of at least 25 weight percent of at least one biodegradable polymer.

In a first aspect, various food service items may be extrusion molded according to the present disclosure. As used here, a "food service item" also includes encompasses service items principally used with beverages. Examples of food service items which may be extrusion molded according to the present disclosure include both tubular and non-tubular items such as eating utensils (such as forks, spoons, knives, and sporks), drinking straws, beverage splash sticks, beverage stirrers, cocktail picks, and toothpick. In a more preferred embodiment, the food service item is a straw or more specifically a drinking straw.

In addition, tubular articles which are not food service items (such as medical tubing or gas tubing or laboratory or automotive tubing) may also be extrusion molded according to the present disclosure. In one embodiment, the tubing may be medical tubing, suitable for use in collecting blood, for IV lines, and so forth. The medical tubing generally has an outer diameter from about 0.01 to about 100 millimeters and a tube wall thickness from about 0.01 to about 10 millimeters
These tubular articles and other food service items provided according to the present disclosure are preferably biodegradable. In this regard, the term "biodegradable" as used herein refers to a plastic or polymeric material coating that will undergo biodegradation by a living organism (microbes) in anaerobic and aerobic environments (as determined by ASTM D5511), in soil environments (as determined by ASTM 5988), in freshwater environments (as determined by ASTM D5271 (EN 29408)), or in marine environments (as determined by ASTM D6691). The biodegradability of biodegradable plastics can also be determined using ASTM D6868 and European EN 13432.

As noted above, the tubular articles and other food service items are extrusion molded from a polymer resin which is made up of at least 25 weight percent of at least one biodegradable polymer. More preferably, the polymer resin includes from about 40 weight percent to about 95 weight percent of at least one biodegradable polymer.

In general, this polymer resin is preferably made up of at least one biodegradable polymer selected from the group consisting of polyhydroxyalkanoates, polycaprolactone, polylactic acid, polybutylene succinate, polybutylene succinate-co-butylene adipate, polybutylene adipate terephthalate, blends of two or more of these polymers, and reaction products of two or more of these polymers.

The at least one biodegradable polymer includes polyhydroxyalkanoates ("PHAs"). These polyhydroxyalkanoates are a copolymer made up of from about 65 (preferably about 70) to about 99.5 mole percent hydroxybutyrate moieties and from about 0.5 to about 35 (preferably about 30) mole percent hydroxyhexanoate moieties. More preferably, the polyhydroxyalkanoate copolymers are made up of from about 85 to about 99 mole percent hydroxybutyrate moieties and from about 1 to about 15 mole percent hydroxyhexanoate moieties. Alternatively, in some instances, the copolymer may include hydroxyvalerate moieties, hydroxyoctanoate moieties and/or hydroxydecanoate moieties.

In some instances, the polyhydroxyalkanoates may be a terpolymer. For example, the polyhydroxyalkanoates may be made up of monomer residues of 3-hydoxybutyrate, monomer residues of 3-hydoxyvalerate, and monomer residues of 3-hydoxyhexanoate.

In some instances, the polyhydroxyalkanoates preferably have a weight average molecular weight from about 1,000 Daltons to about 2.5 million Daltons. In other instances, the polyhydroxyalkanoates preferably have a weight average molecular weight from about 10,000 Daltons to about 7.5 million Daltons, and more preferably from about 50,000 Daltons to about 1.5 million Daltons.

In some preferred embodiments, the at least one biodegradable polymer preferably includes a reaction product formed from reactive extrusion of polyhydroxyalkanoates and a second biodegradable polymer.

In another preferred embodiment, the polymer resin preferably includes at least one biodegradable polymer selected from the group consisting polylactic acid, polybutylene succinate, polybutylene succinate-co-butylene adipate, polybutylene adipate terephthalate, and mixtures thereof. In a particularly preferred embodiment, the at least one biodegradable polymer preferably includes polycaprolactone and/or polylactic acid having a weight average molecular weight from about 10,000 Daltons to about 300,000 Daltons, and more preferably from about 30,000 Daltons to about 250,000 Daltons.

In addition to the biodegradable polymer, the tubular articles and/or other food service items may, optionally, include further components as well. For example, the resin may also include a filler, a nucleating agent, polysaccharide, and/or a plasticizer.

Thus, in some embodiments, it is preferred that the polymer resin also includes from about 1 to about 50 weight percent of at least one filler selected from the group consisting of clays, calcium carbonate, talc, kaolinite, montomorillonite, bentonite, silica, chitin, titanium dioxide, nano clay, nanocellulose, mica and mixtures thereof.

In some instances, it is preferred that the polymer resin also includes from about 0.5 to about 20 weight percent of at least one nucleating agent selected from the group consisting of polyester waxes, behenamide, crodamide, stearamide, erucamide, pentaerythritol, dipentaerythritol, sulfur and mixtures thereof.

In some instances, it is also preferred that the polymer resin also includes from about 1.0 to about 25 weight percent of at least one polysaccharide.

In certain embodiments, it is preferred that the polymer resin also includes from about 0.5 to about 15 weight percent of at least one plasticizer selected from the group consisting of sebacates, citrates, fatty esters of adipic acid, fatty esters of succinic acid, fatty esters of glucaric acid, lactates, alkyl diesters, alkyl methyl esters, dibenzoates, propylene carbonate, caprolactone diols having a weight average molecular weight from about 200 to about 10,000 g/mol, polyethylene glycols having a weight average molecular weight from about 400 to about 10,000 g/mol, esters of vegetable oils, long chain alkyl acids, adipates, glycerol, isosorbide derivatives, and mixtures thereof.

The present disclosure also provides a method for making the biodegradable tubular articles and/or food service items, using extrusion molding. This involves an initial step of providing a polymer resin which is made of at least 25 weight percent of at least one biodegradable polymer. A charge of this polymer resin is heated, in an extruder, to a temperature at or above the melting point of the polymer resin. The exact temperature to which the polymer resin is heated may vary somewhat, depending upon the precise make- up of the polymer resin - the type of biodegradable polymer, the molecular weight of the biodegradable polymer, the amount of additives, etc. In general, the polymer resin is heated to a temperature from about 125 °C to about 280 °C, and more preferably heated to a temperature from about 145 °C to about 240 °C.

Once heated, the polymer resin charge is then extruded through a die. In order to form generally tubular articles (such as medical tubing, gas tubing, laboratory tubing, automotive tubing, drinking straws, and beverage stirrers) according to the present disclosure, the polymer resin charge is preferably profile extruded through the die. In profile extrusion, the polymer is extruded into a more three-dimensional shape, rather than simply a generally two-dimensional flat sheet or film. The profile extruded food service item may include a hollow interior cavity - such as with a drinking straw. In such case, a flow of air or an inert gas may be introduced into the die, so as to prevent collapse to this hollow cavity immediately after initial extrusion of the polymer charge.

After being profile extruded and formed, the tubular items are then preferably cooled, for instance using a chilled water bath, in order to crystalize and solidify the polymers and cut to final length in order to form the finished tubular article.

In a particularly preferred embodiment, the polymer resin used in the profile extrusion may include a biodegradable polymer which is formed during an earlier reactive extrusion step. For instance, according to the present disclosure, two biopolymers may be reacted with one another - so as to form a new, larger polymer - during the initial reactive extrusion. A polyhydroxyalkanoate may for example be reacted during the initial reactive extrusion with a second biodegradable polymer, such as polylactic acid or polycaprolactone. In other instances, however, two different homopolymers polyhydroxyalkanoates may be reacted with one another during the reactive extrusion, thereby forming a new, larger polyhydroxyalkanoate copolymer.

In the case of reactive extrusion, a small amount of a catalyst and/or reaction initiator may also be included in the polymer resin charge, in order to facilitate reaction during the extrusion. For instance, the polymer resin charge includes a minor amount of epoxides, isocyanates, acrylates, anhydrides, acids, and/or alcohols for polymerizing, crosslinking, or curing of the resin during extrusion.

During the initial reactive extrusion, the polymer resin is preferably formed into pellets or another small, standardized shape. These pellets are then cooled and solidified. In this pelletized form, the polymer resin may be stored until being converted into a final molded article.

In the regard, the reactive extrusion may, if desired, be employed with the profile extrusion of tubular articles, as discussed above. In other instances, however, the reactive extrusion of the present disclosure may also be used in non-profile extrusion for the making of articles which are not generally tubular in shape. In such embodiments, rather than being extruded into its final product shape, the polymer resin may be re-melted and extruded into a mold profile to form the final, non-tubular shape of the food service item. Once the mold profile has been filled, the polymer resin is cooled and removed from the mold profile.

### EXAMPLES

The following non-limiting examples illustrate various additional aspects of the invention. Unless otherwise indicated, temperatures are in degrees Celsius and percentages are by weight based on the dry weight of the formulation.

EXAMPLE 1: A twin-screw extruder first pelletized PHA (i.e. converted PHA from a powder form to a pellet form) using temperatures from 50 °F to 350 °F (10.0 °C to 176.67 °C) and feed rates of at a minimum of 70 pounds (31.75 kg) per hour. Once made, the PHA pellets were properly dried in a hot air resin dryer for 24 hours and then were blended with a compostable polymeric component added for flexibility, a nucleating agent, and a structural filler through the use of a twin screw extruder employing a temperature ramp of 50 °F to 350 °F (10.0 °C to 176.67 °C) and feed rates of at a minimum of 50 pounds (22.68 kg) per hour. The resulting resins are in pellet form. The pellets were later converted into straws via a single screw extruder utilizing a temperature ramp from 270 °F to 360 °F (132.22 °C to 182.22 °C) and having a die in the shape of a straw profile. The extruder profile was later cooled and crystallized via a cooling water bath and later cut into straws of appropriate length and dimensions. The final straw has a wall thickness range of 6 to 7 mils (0.15 to 0.18 mm), a length of 2 to 8 inches (5.08 to 20.32 cm), and an inner diameter of 50 to 292 mils (1.27 to 7.42 mm).

EXAMPLE 2: The process was repeated but by utilizing 20 to 80 weight % PHA, 2 to 30 weight % poly(lactic acid), 10 to 50 weight % polybutylene adipate terephthalate, 10 to 35 weight % carbon carbonate, 0.05 to 0.5 weight % 2,5-dimethyl-2,5-di(tert-butylperoxy)hexane, and 0.05 to 3 weight % pentaerythritol as component materials for the finalized straw resin.

EXAMPLE 3: The process was repeated but by utilizing 20 to 80 weight % PHA, 2 to 30 weight % poly(lactic acid), 10 to 35 weight % calcium carbonate, 0.05 to 0.5 weight % 2,5-dimethyl-2,5-di(tert-butylperoxy)hexane, and 0.05 to 3 weight % pentaerythritol as component materials for the finalized straw resin.

EXAMPLE 4: The process was repeated but by utilizing 20 to 80 weight % PHA, 2 to 30 weight % poly(lactic acid), 10 to 35 weight % calcium carbonate, 0.05 to 0.5 weight % 2,5-dimethyl-2,5-di(tert-butylperoxy)hexane, 0.05 to 3 weight % pentaerythritol, and 0.05 to 3 weight % docosanamide as component materials for the finalized straw resin.

EXAMPLE 5: The process was repeated but by utilizing 20 to 80 weight % PHA, 2 to 30 weight % poly(lactic acid), 10 to 35 weight % calcium carbonate, 0.05 to 0.5 weight % 2,5-dimethyl-2,5-di(tert-butylperoxy)hexane, 0.01 to 3 weight % pentaerythritol, 1 to 10 weight % polyethylene glycol, and 0.01 to 3 weight % docosanamide as component materials for the finalized straw resin.

EXAMPLE 6: The process was repeated but by utilizing 20 to 80 weight % PHA, 2 to 30 weight % poly(lactic acid), 10 to 35 weight % calcium carbonate, 0.05 to 0.5 weight % 2,5-dimethyl-2,5-di(tert-butylperoxy)hexane, 0.05 to 3 weight % pentaerythritol, 1 to 10 weight % polyethylene glycol, and 0.05 to 3 weight % docosanamide as component materials for the finalized straw resin.

EXAMPLE 7: The process was repeated but by utilizing 20 to 80 weight % PHA, 2 to 30 weight % poly(lactic acid), 10 to 50 weight % poly(butylene succinate co-adipate), and 0.05 to 3 weight % pentaerythritol as component materials for the finalized straw resin.

EXAMPLE 8: The process was repeated but by utilizing 20 to 80 weight % PHA, 10 to 50 weight % poly(butylene succinate co-adipate), 1 to 10 weight % polyethylene glycol, and 0.05 to 3 weight % pentaerythritol as component materials for the finalized straw resin.

EXAMPLE 9: The process was repeated but by utilizing 20 to 80 weight % PHA, 2 to 30 weight % poly(lactic acid), 10 to 35 weight % kaolin clay structural filler, 1 to 10 weight % polyethylene glycol, 0.05 to 3 weight % pentaerythritol, and 0.05 to 0.5 weight % 2,5-dimethyl-2,5-di(tert-butylperoxy)hexane as component materials for the finalized straw resin.

EXAMPLE 10: The process was repeated but by utilizing 20 to 80 weight % PHA, 2 to 30 weight % poly(lactic acid), poly(lactic acid), 10 to 35 weight % talc, 1 to 10 weight % polyethylene glycol, 0.05 to 3 weight % pentaerythritol, and 0.05 to 0.5 weight % dimethyl-2,5-di(tert-butylperoxy)hexane as component materials for the finalized straw resin.

The foregoing description of preferred embodiments for this invention have been presented for purposes of illustration and description. They are not intended to be exhaustive or to limit the invention to the precise form disclosed. Obvious modifications or variations are possible in light of the above teachings. The embodiments are chosen and described in an effort to provide the best illustrations of the principles of the invention and its practical application, and to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A biodegradable tubular article, wherein the tubular article is profile extrusion molded from a polymer resin comprising at least 25 weight percent of at least one biodegradable polymer,
wherein the at least one biodegradable polymer comprises a reaction product formed from reactive extrusion of polyhydroxyalkanoates and a second biodegradable polymer; and
wherein the polyhydroxyalkanoates comprise from about 65 to about 99.5 mole percent hydroxybutyrate moieties and from about 0.5 to about 35 mole percent hydroxyhexanoate moieties; and
wherein the reactive extrusion is catalyzed by a polymerization catalyst selected from the group consisting of epoxides, isocyanates, acrylates, anhydrides, acids, and/or alcohols.

2. The biodegradable tubular article of Claim 1, wherein the tubular article is selected from the group consisting of medical tubing, gas tubing, laboratory tubing, automotive tubing, drinking straws, and beverage stirrers.

3. The biodegradable tubular article of Claim 1, wherein the polymer resin comprises at least one biodegradable polymer selected from the group consisting of polyhydroxyalkanoates, polycaprolactone, polylactic acid, polybutylene succinate, polybutylene succinate-co-butylene adipate, polybutylene adipate terephthalate, blends of two or more of the aforementioned polymers, and reaction products of two or more of the aforementioned polymers.

4. The biodegradable tubular article of Claim 1, wherein the polymer resin comprises at least one biodegradable polymer selected from the group consisting polylactic acid, polybutylene succinate, polybutylene succinate adipate, polybutylene adipate terephthalate, and mixtures thereof.

5. The biodegradable tubular article of Claim 1, wherein the polymer resin further comprises from about 1 to about 50 weight percent of at least one filler selected from the group consisting of clays, calcium carbonate, talc, kaolinite, montomorillonite, bentonite, silica, chitin, titanium dioxide, nano clay, nanocellulose, mica and mixtures thereof.

6. The biodegradable tubular article of Claim 1, wherein the polymer resin further comprises from about 0.01 to about 20 weight percent of at least one nucleating agent selected from the group consisting of polyester waxes, behenamide, crodamide, stearamide, erucamide, pentaerythritol, sulfur, dipentaerythritol and mixtures thereof.

7. The biodegradable tubular article of Claim 1, wherein the polymer resin further comprises from about 1.0 to about 25 weight percent of at least one polysaccharide.

8. The biodegradable tubular article of Claim 1, wherein the polymer resin further comprises from about 0.5 to about 15 weight percent of at least one plasticizer selected from the group consisting of sebacates, citrates, fatty esters of adipic acid, fatty esters of succinic acid, fatty esters of glucaric acid, lactates, alkyl diesters, alkyl methyl esters, dibenzoates, propylene carbonate, esters of vegetable oils, long chain alkyl acids, adipates, glycerol, isosorbide derivatives, and mixtures thereof.

9. The biodegradable tubular article of Claim 1, wherein the polymer resin further comprises from about 15 to about 35 weight percent of at least one filler, from about 1.0 to about 5.0 weight percent of at least one nucleating agent, and from about 0.01 to about 2 of at least one polymerization catalyst or initiator.

10. A method for making a biodegradable tubular article in accordance with any of claims 1 to 9, the method comprising the steps of:
providing a polymer resin comprising at least 25 weight percent of at least one biodegradable polymer;
heating a charge of the polymer resin, in an extruder, to a temperature at or above the melting point of the polymer resin; and
profile extruding the polymer resin charge through a die to form the tubular article, wherein the at least one biodegradable polymer in the polymer resin charge comprises polyhydroxyalkanoates and a second biodegradable polymer.

11. A method for making a biodegradable food service item, the method comprising the steps of:
providing a polymer resin comprising at least 25 weight percent of a first and a second biodegradable polymer;
heating a charge of the polymer resin to a temperature at or above the melting point of the polymer resin; and
molding a food service item from the polymer resin charge,
wherein the at least one biodegradable polymer in the polymer resin charge comprises polyhydroxyalkanoates and a second biodegradable polymer, wherein the food service item comprises a reaction product formed from reactive extrusion of the polyhydroxyalkanoates and the second biodegradable polymer, and
wherein the polyhydroxyalkanoates comprise from about 65 to about 99.5 mole percent hydroxybutyrate moieties and from about 0.5 to about 35 mole percent hydroxyhexanoate moieties; and
wherein the reactive extrusion is catalyzed by a polymerization catalyst selected from the group consisting of epoxides, isocyanates, acrylates, anhydrides, acids, and/or alcohols.

12. The method of Claim 11, wherein the biodegradable food service item comprises an eating utensil, beverage splash stick, cocktail pick, or toothpick.

## Patentansprüche

1. Biologisch abbaubarer röhrenförmiger Gegenstand, wobei der röhrenförmige Gegenstand aus einem Polymerharz profilextrudiert ist, das mindestens 25 Gewichtsprozent mindestens eines biologisch abbaubaren Polymers umfasst,
wobei das mindestens eine biologisch abbaubare Polymer ein Reaktionsprodukt umfasst, das durch reaktive Extrusion von Polyhydroxyalkanoaten und einem zweiten biologisch abbaubaren Polymer gebildet wird; und
wobei die Polyhydroxyalkanoate etwa 65 bis etwa 99,5 Molprozent Hydroxybutyrat-Anteile und etwa 0,5 bis etwa 35 Molprozent Hydroxyhexanoat-Anteile umfassen; und
wobei die reaktive Extrusion durch einen Polymerisationskatalysator katalysiert wird, der aus der Gruppe ausgewählt ist, die aus Epoxiden, Isocyanaten, Acrylaten, Anhydriden, Säuren und/oder Alkoholen besteht.

2. Biologisch abbaubarer röhrenförmiger Gegenstand nach Anspruch 1, wobei der röhrenförmige Gegenstand aus der Gruppe ausgewählt ist, die aus medizinischen Schläuchen, Gasschläuchen, Laborschläuchen, Automobilschläuchen, Trinkhalmen und Getränkerührern besteht.

3. Biologisch abbaubarer röhrenförmiger Gegenstand nach Anspruch 1, wobei das Polymerharz mindestens ein biologisch abbaubares Polymer umfasst, das aus der Gruppe ausgewählt ist, die aus Polyhydroxyalkanoaten, Polycaprolacton, Polymilchsäure, Polybutylensuccinat, Polybutylensuccinat-Co-Butylenadipat, Polybutylenadipat-Terephthalat, Mischungen von zwei oder mehreren der vorgenannten Polymere und Reaktionsprodukten von zwei oder mehreren der vorgenannten Polymere besteht.

4. Biologisch abbaubarer röhrenförmiger Gegenstand nach Anspruch 1, wobei das Polymerharz mindestens ein biologisch abbaubares Polymer umfasst, das aus der Gruppe ausgewählt ist, die aus Polymilchsäure, Polybutylensuccinat, Polybutylensuccinatadipat, Polybutylenadipat-Terephthalat und Mischungen davon besteht.

5. Biologisch abbaubarer röhrenförmiger Gegenstand nach Anspruch 1, wobei das Polymerharz ferner etwa 1 bis etwa 50 Gewichtsprozent mindestens eines Füllstoffs umfasst, der aus der Gruppe ausgewählt ist, die aus Tonen, Calciumcarbonat, Talk, Kaolinit, Montomorillonit, Bentonit, Siliciumdioxid, Chitin, Titandioxid, Nanoton, Nanocellulose, Glimmer und Mischungen davon besteht.

6. Biologisch abbaubarer röhrenförmiger Gegenstand nach Anspruch 1, wobei das Polymerharz ferner etwa 0,01 bis etwa 20 Gewichtsprozent mindestens eines Keimbildners umfasst, der aus der Gruppe ausgewählt ist, die aus Polyesterwachsen, Behenamid, Crodamid, Stearamid, Erucamid, Pentaerythrit, Schwefel, Dipentaerythrit und Mischungen davon besteht.

7. Biologisch abbaubarer röhrenförmiger Gegenstand nach Anspruch 1, wobei das Polymerharz ferner etwa 1,0 bis etwa 25 Gewichtsprozent mindestens eines Polysaccharids umfasst.

8. Biologisch abbaubarer röhrenförmiger Gegenstand nach Anspruch 1, wobei das Polymerharz ferner etwa 0,5 bis etwa 15 Gewichtsprozent mindestens eines Weichmachers umfasst, ausgewählt aus der Gruppe bestehend aus Sebacaten, Citraten, Fettsäureestern von Adipinsäure, Fettsäureestern von Bernsteinsäure, Fettsäureestern von Glucarsäure, Lactaten, Alkyldiestern, Alkylmethylestern, Dibenzoaten, Propylencarbonat, Estern von Pflanzenölen, langkettigen Alkylsäuren, Adipaten, Glycerin, Isosorbid-Derivaten und Mischungen davon.

9. Biologisch abbaubarer röhrenförmiger Gegenstand nach Anspruch 1, wobei das Polymerharz ferner etwa 15 bis etwa 35 Gewichtsprozent mindestens eines Füllstoffs, etwa 1,0 bis etwa 5,0 Gewichtsprozent mindestens eines Keimbildners und etwa 0,01 bis etwa 2 Gewichtsprozent mindestens eines Polymerisationskatalysators oder -initiators umfasst.

10. Verfahren zur Herstellung eines biologisch abbaubaren röhrenförmigen Gegenstands nach einem der Ansprüche 1 bis 9, wobei das Verfahren die folgenden Schritte umfasst:
Bereitstellen eines Polymerharzes, das mindestens 25 Gewichtsprozent mindestens eines biologisch abbaubaren Polymers umfasst;
Erhitzen einer Charge des Polymerharzes in einem Extruder auf eine Temperatur bei oder über dem Schmelzpunkt des Polymerharzes; und
Profilextrudieren der Polymerharzcharge durch eine Düse, um den röhrenförmigen Gegenstand zu bilden, wobei das mindestens eine biologisch abbaubare Polymer in der Polymerharzcharge Polyhydroxyalkanoate und ein zweites biologisch abbaubares Polymer umfasst.

11. Verfahren zur Herstellung eines biologisch abbaubaren Lebensmittel-Serviceartikels, wobei das Verfahren die folgenden Schritte umfasst:
Bereitstellen eines Polymerharzes, das mindestens 25 Gewichtsprozent eines ersten und eines zweiten biologisch abbaubaren Polymers umfasst;
Erhitzen einer Charge des Polymerharzes auf eine Temperatur bei oder über dem Schmelzpunkt des Polymerharzes; und
Formen eines Lebensmittel-Serviceartikels aus der Polymerharzcharge,
wobei das mindestens eine biologisch abbaubare Polymer in der Polymerharzcharge Polyhydroxyalkanoate und ein zweites biologisch abbaubares Polymer umfasst, wobei der Lebensmittel-Serviceartikel ein Reaktionsprodukt umfasst, das durch reaktive Extrusion der Polyhydroxyalkanoate und des zweiten biologisch abbaubaren Polymers gebildet wird; und
wobei die Polyhydroxyalkanoate etwa 65 bis etwa 99,5 Molprozent Hydroxybutyrat-Anteile und etwa 0,5 bis etwa 35 Molprozent Hydroxyhexanoat-Anteile umfassen; und
wobei die reaktive Extrusion durch einen Polymerisationskatalysator katalysiert wird, der aus der Gruppe ausgewählt ist, die aus Epoxiden, Isocyanaten, Acrylaten, Anhydriden, Säuren und/oder Alkoholen besteht.

12. Verfahren nach Anspruch 11, wobei der biologisch abbaubare Lebensmittel-Serviceartikel ein Essbesteck, einen Getränkespritzstab, einen Cocktailspieß oder einen Zahnstocher umfasst.

## Revendications

1. Article tubulaire biodégradable, dans lequel l'article tubulaire est un profilé moulé par extrusion à partir d'une résine polymère comprenant au moins 25 % en poids d'au moins un polymère biodégradable,
dans lequel le au moins un polymère biodégradable comprend un produit de réaction formé à partir d'une extrusion réactive de polyhydroxyalcanoates et d'un second polymère biodégradable ; et
dans lequel les polyhydroxyalcanoates comprennent d'environ 65 à environ 99,5 pour cent en mole de fractions d'hydroxybutyrate et d'environ 0,5 à environ 35 pour cent en mole de fractions d'hydroxyhexanoate ; et
dans lequel l'extrusion réactive est catalysée par un catalyseur de polymérisation choisi dans le groupe constitué d'époxydes, d'isocyanates, d'acrylates, d'anhydrides, d'acides et/ou d'alcools.

2. Article tubulaire biodégradable selon la revendication 1, dans lequel l'article tubulaire est choisi dans le groupe constitué d'une tubulure médicale, d'une tubulure à gaz, d'une tubulure de laboratoire, d'une tubulure automobile, de pailles à boire et d'agitateurs de boisson.

3. Article tubulaire biodégradable selon la revendication 1, dans lequel la résine polymère comprend au moins un polymère biodégradable choisi dans le groupe constitué de polyhydroxyalcanoates, de polycaprolactone, d'acide polylactique, de succinate de polybutylène, de succinate de polybutylène-co-adipate de butylène, de téréphtalate d'adipate de polybutylène, de mélanges de deux ou plus des polymères mentionnés ci-dessus, et de produits de réaction de deux ou plus des polymères mentionnés ci-dessus.

4. Article tubulaire biodégradable selon la revendication 1, dans lequel la résine polymère comprend au moins un polymère biodégradable choisi dans le groupe constitué de l'acide polylactique, du succinate de polybutylène, de l'adipate de succinate de polybutylène, du téréphtalate d'adipate de polybutylène, et de mélanges de ceux-ci.

5. Article tubulaire biodégradable selon la revendication 1, dans lequel la résine polymère comprend en outre d'environ 1 à environ 50 % en poids d'au moins une charge choisie dans le groupe constitué d'argiles, de carbonate de calcium, de talc, de kaolinite, de montomorillonite, de bentonite, de silice, de chitine, de dioxyde de titane, de nano-argile, de nanocellulose, de mica et de mélanges de ceux-ci.

6. Article tubulaire biodégradable selon la revendication 1, dans lequel la résine polymère comprend en outre d'environ 0,01 à environ 20 % en poids d'au moins un agent de nucléation choisi dans le groupe constitué de cires de polyester, de béhénamide, de crodamide, de stéaramide, d'érucamide, de pentaérythritol, de soufre, de dipentaérythritol et de mélanges de ceux-ci.

7. Article tubulaire biodégradable selon la revendication 1, dans lequel la résine polymère comprend en outre d'environ 1,0 à environ 25 % en poids d'au moins un polysaccharide.

8. Article tubulaire biodégradable selon la revendication 1, dans lequel la résine polymère comprend en outre d'environ 0,5 à environ 15 pour cent en poids d'au moins un plastifiant choisi dans le groupe constitué de sébacates, de citrates, d'esters gras d'acide adipique, d'esters gras d'acide succinique, d'esters gras d'acide glucarique, de lactates, de diesters d'alkyle, d'esters d'alkyle et de méthyle, de dibenzoates, de carbonate de propylène, d'esters d'huiles végétales, d'acides alkyles à longue chaîne, d'adipates, de glycérol, de dérivés d'isosorbide, et de mélanges de ceux-ci.

9. Article tubulaire biodégradable selon la revendication 1, dans lequel la résine polymère comprend en outre d'environ 15 à environ 35 % en poids d'au moins une charge, d'environ 1,0 à environ 5,0 % en poids d'au moins un agent de nucléation, et d'environ 0,01 à environ 2 d'au moins un catalyseur ou initiateur de polymérisation.

10. Procédé de fabrication d'un article tubulaire biodégradable selon l'une quelconque des revendications 1 à 9, le procédé comprenant les étapes suivantes consistant à :
fournir une résine polymère comprenant au moins 25 % en poids d'au moins un polymère biodégradable ;
chauffer une charge de la résine polymère, dans une extrudeuse, à une température égale ou supérieure au point de fusion de la résine polymère ; et
extruder un profilé de la charge de résine polymère à travers une filière pour former l'article tubulaire, dans lequel le au moins un polymère biodégradable dans la charge de résine polymère comprend des polyhydroxyalcanoates et un second polymère biodégradable.

11. Procédé de fabrication d'un article de service alimentaire biodégradable, le procédé comprenant les étapes suivantes consistant à :
fournir une résine polymère comprenant au moins 25 % en poids d'un premier et d'un second polymère biodégradable ;
chauffer une charge de la résine polymère à une température égale ou supérieure au point de fusion de la résine polymère ; et
mouler un article de service alimentaire à partir de la charge de résine polymère,
dans lequel le au moins un polymère biodégradable dans la charge de résine polymère comprend des polyhydroxyalcanoates et un second polymère biodégradable, dans lequel l'article de service alimentaire comprend un produit de réaction formé par extrusion réactive des polyhydroxyalcanoates et du second polymère biodégradable, et
dans lequel les polyhydroxyalcanoates comprennent d'environ 65 à environ 99,5 pour cent en mole de fractions d'hydroxybutyrate et d'environ 0,5 à environ 35 pour cent en mole de fractions d'hydroxyhexanoate ; et
dans lequel l'extrusion réactive est catalysée par un catalyseur de polymérisation choisi dans le groupe constitué d'époxydes, d'isocyanates, d'acrylates, d'anhydrides, d'acides et/ou d'alcools.

12. Procédé selon la revendication 11, dans lequel l'article de service alimentaire biodégradable comprend un ustensile de vaisselle, un bâton d'agitation de boisson, un pique apéritif ou un cure-dent.
